# EUROPEAN PATENT SPECIFICATION

(11) **EP 2 006 519 B1**
(45) Date of publication and mention of the grant of the patent: **21.11.2012**
(21) Application number: 08158595.2
(22) Date of filing: 19.06.2008
(51) Int. Cl.: F02D 41/24, B60H 1/00, F02N 11/08

(54) **Controller for a vehicle**
Steuerung für ein Fahrzeug
Contrôleur pour véhicule

(30) Priority: 21.06.2007 JP 2007164096
(43) Date of publication of application: 24.12.2008
(73) Proprietor: Toyota Jidosha Kabushiki Kaisha, Toyota-shi, Aichi-ken, 471-8571 (JP)
(72) Inventor: Moriya, Kouki, Toyota-shi Aichi 471-8571 (JP)
(74) Representative: TBK

(56) References cited:
- US-A- 4 337 742
- US-A- 5 520 150
- US-A1- 2002 069 656
- US-A1- 2004 069 000

## Description

### BACKGROUND OF THE INVENTION

### Field of the Invention

The present invention relates to control of a vehicle mounting a motor and a starter device and, more specifically, to a technique for preventing deviation between actual rotational position and rotational position detected based on an amount of operation of a step motor, resulting from lowering of power supply voltage at the start of engine operation.

### Description of the Background Art

Conventionally, in an air conditioner mounted on a vehicle, a motor (hereinafter referred to as a step motor or a stepping motor) is used for switching a dumper provided in a flow path of air circulating through the air conditioner. The step motor is controlled in an open loop. Therefore, when a key switch (ignition key) is turned on, rotational position of the motor is returned to the original point and reset to the initial position by, for example, abutment to a stopper. A technique for correcting deviation between the actual rotational position of the step motor and the rotational position detected based on the amount of operation of the step motor by such an approach has been known.

As a technique for preventing deviation in rotational position of a motor, Japanese Patent Laying-Open No. 2006-226146 discloses a starter having a function of preventing reverse rotation of an armature that occurs in engine stall or when a vehicle moves backward due to engine stall on a climbing road. The starter includes a start-up motor generating rotational force of the armature when power is fed, an output shaft to which rotation of the armature is transmitted, and a pinion gear arranged on the output shaft and always meshed with an engine side gear (referred to as a ring gear), and the starter transmits the rotational force generated in the armature through the pinion gear to the ring gear, thereby to drive the engine. The starter is provided with a reverse rotation preventing clutch that allows rotation of the armature when the engine is driven and restricts rotation of the armature when rotational force in a direction reverse to the engine driving direction is transmitted to the armature.

By the starter disclosed in the laid-open application, when the engine is driven, rotation of the armature is allowed and, therefore, the rotational force generated in the armature can be transmitted from the pinion gear to the ring gear to drive the engine. On the other hand, rotational force in a direction reverse to the direction when the engine is driven may be transmitted to the armature when the crankshaft swings in an engine stall or when the vehicle moves backward due to engine stall on a climbing road. In such a situation, rotation of the armature is restricted by the reverse rotation preventing clutch and, therefore, rotation of the armature in the direction reverse to the engine driving direction can be prevented.

From the viewpoint of preventing global warming and of resource saving, an idling stop system (also referred to as an economy running system, or an engine automatic stop-and-start system) has been practically used, in which the engine is automatically stopped when the vehicle stops, for example, at a red light at an intersection, and the engine restarts upon a driver's operation (such as pressing an accelerator pedal or releasing a brake pedal) to start running again.

In a vehicle mounting such an idling stop system, engine-stop control takes place when predetermined conditions for stopping are satisfied.

In the vehicle mounting the idling stop system, it follows that engine start and stop are frequently repeated. Assume that the rotational position of step motor is not reset to the initial position, since it is difficult, for example, to expect the next engine start operation. In that case, a problem arises that every time the engine start and stop operations are repeated, deviation between the actual rotational position and the rotational position detected based on the amount of rotation of the step motor increases.

The starter disclosed in the laid-open application simply restricts reverse rotation mechanically by a clutch. Therefore, it cannot be applied to a step motor that rotates both in the forward and backward directions.

The document US 4,337,742 A discloses an idle air control apparatus for an internal combustion engine having an air induction passage, wherein a control valve in the air conduction passage is controlled by a stepper motor in response to the arithmetic count of applied electrical pulses.

The document US 5,520,150 A discloses an apparatus and a method for driving and controlling a stepping motor for a by-pass valve of an internal combustion engine. The document US 2004/0069000 A1 discloses an air conditioner for a hybrid vehicle, wherein the frequency for startling an engine only for charging a battery can be reduced.

The document US 2002/0069656 A1 discloses an air-conditioning device for a vehicle and a device for controlling an engine for a vehicle, which are capable of suitably controlling the blow-out rate of an air-conditioning compressor at the time when the fuel supply has been cut.

### SUMMARY OF THE INVENTION

An object of the present invention is to provide a controller for a vehicle preventing deviation between the actual rotational position of a step motor and a rotational position detected based on the amount of operation of the step motor resulting from repeated start and stop operations of the engine.

According to an aspect, the present invention provides a controller for a vehicle as defined in claim 1.

According to the invention, the obtaining means obtains a driving history of the step motor (i.e. a time period of driving) while it is determined that the voltage of power storage device possibly attains to a predetermined voltage or lower. The control means controls the step motor such that the rotational position reaches the initial position, based on the obtained driving history. In the state in which the voltage of power storage device may possibly attain to a predetermined voltage or lower, the deviation between the actual rotational position of the step motor and the rotational position detected based on the amount of rotation of the step motor tends to increase as the step motor is driven for a longer time period or the step motor is driven more frequently. Therefore, by controlling the step motor such that the rotational position reaches the initial position based on the driving history (for example, when the driving time becomes longer), it becomes possible to eliminate the increased deviation. Therefore, a controller for a vehicle, which prevents deviation between the actual rotational position of a step motor and a rotational position detected based on the amount of operation of the step motor resulting from repeated start and stop operations of the engine, can be provided.

According to the present invention, when the voltage of power storage device is not higher than the predetermined voltage, the deviation between the actual rotational position of the step motor and the rotational position detected based on the amount of rotation of the step motor tends to increase as the step motor is driven for a longer time period or the step motor is driven more frequently. Therefore, by controlling the step motor such that the rotational position reaches the initial position based on the driving history, it becomes possible to eliminate the increased deviation.

According to the present invention, the control means controls the step motor such that the rotational position reaches the initial position when the integrated time period of motor drive attains to the predetermined time period or longer. Therefore, the deviation between the actual rotational position of the step motor and the rotational position detected based on the amount of rotation of the step motor, which increases as the integrated time period increases, can be eliminated.

More preferably, the control means includes means for controlling the step motor such that a driving period of the step motor does not overlap the period in which the voltage of the power storage device attains to the predetermined voltage or lower.

According there to, the step motor is controlled such that the rotational position reaches the initial position so that the step motor driving period does not overlap with the period in which the voltage of power storage device attains to the predetermined voltage or lower. Consequently, the rotational position of the step motor can reliably be returned to the initial position.

More preferably, the control means includes means for controlling the step motor such that a driving period of the step motor does not overlap the period from when start of operation of the internal combustion engine is requested until an operation of the internal combustion engine is started.

According there to the step motor is controlled such that the rotational position reaches the initial position so that the step motor driving period does not overlap with the period from operation start request to the start of operation of the internal combustion engine. Consequently, the rotational position of the step motor can reliably be returned to the initial position.

More preferably, the step motor is configured to be used for switching a flow path of a medium circulating in a component provided in the vehicle.

According there to by controlling the step motor such that the rotational position reaches the initial position based on the driving history, the deviation between the actual rotational position of the step motor and the rotational position detected based on the amount of operation of the step motor, which increases as the driving time or frequency of driving increases, can be prevented. As a result, flow path of a medium can be switched appropriately in a component (such as an air conditioner) of the vehicle.

More preferably, the step motor is configured to be used for switching a flow path of air circulating in an air conditioner provided in the vehicle.

According there to by controlling the step motor such that the rotational position reaches the initial position based on the driving history, the deviation between the actual rotational position of the step motor and the rotational position detected based on the amount of operation of the step motor, which increases as the driving time or frequency of driving increases, can be prevented. As a result, flow path of a medium can be switched appropriately in the air conditioner.

More preferably, the step motor is configured to be used for switching a flow path of a cooling medium circulating in at least one of the internal combustion engine and a transmission mounted in the vehicle.

According there to, the step motor is used for switching the flow path of a cooling medium circulating through at least one of the inside of internal combustion engine and the inside of transmission mounted on the vehicle. Therefore, by controlling the step motor such that the rotational position reaches the initial position based on the driving history, the deviation between the actual rotational position of the step motor and the rotational position detected based on the amount of operation of the step motor, which increases as the driving time or frequency of driving increases, can be prevented. As a result, flow path of the cooling medium can be switched appropriately.

More preferably, the vehicle is provided with an idling stop system, in which the internal combustion engine is configured to be stopped when a predetermined stop condition is satisfied and the internal combustion engine is configured to be started by the starter device when a predetermined starting condition is satisfied.

According there to, by applying the present invention to a vehicle provided with the idling stop system, it becomes possible to prevent increase of deviation between the actual rotational position of the step motor and the rotational position detected based on the amount of operation of the step motor resulting from repeated start and stop operations of the internal combustion engine.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows a configuration of a vehicle with idling stop system on which the controller for the vehicle in accordance with a first embodiment of the present invention is mounted.
Fig. 2 is a functional block diagram of an ECU as the controller for the vehicle in accordance with the first embodiment.
Fig. 3 is a flowchart showing control structure of a program executed by the ECU as the controller for the vehicle in accordance with the first embodiment.
Fig. 4 is a timing chart showing the operation of the ECU as the controller for the vehicle in accordance with the first embodiment.
Fig. 5 is a flowchart showing control structure of a program executed by the ECU as the controller for the vehicle in accordance with a second embodiment.
Fig. 6 is a flowchart showing control structure of a program executed by the ECU as the controller for the vehicle in accordance with a comparative example not covered by the present invention.

### DESCRIPTION OF THE PREFERRED EMBODIMENTS

In the following, embodiments of the present invention will be described with reference to the figures. In the following description, the same components are denoted by the same reference characters. Their names and functions are also the same. Therefore, detailed description thereof will not be repeated.

### <First Embodiment>

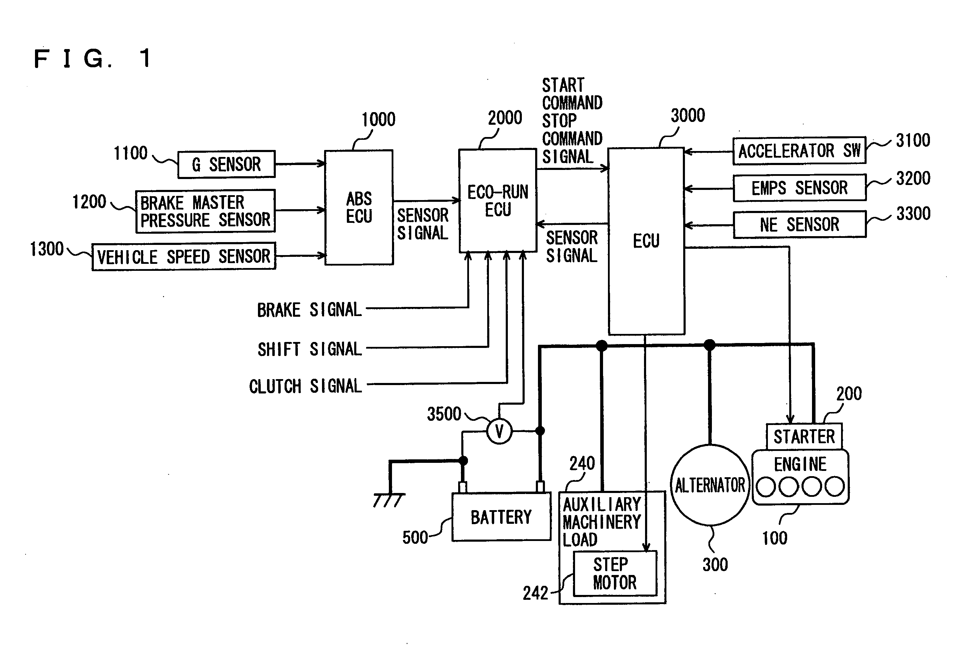

Referring to Fig. 1, a control block of an idling stop system in accordance with an embodiment of the present invention will be described. It is noted that the transmission mounted in the vehicle may be a manual transmission or an automatic transmission.

The hardware as the object of control in the idling stop system includes: an engine 100 as the internal combustion engine; a starter 200 cranking engine 100 for starting the operation of engine 100; an alternator 244 connected to a crankshaft pulley of engine 100 by a belt; an auxiliary machinery load 240; and a battery (secondary battery) 250 supplying power to starter 200 and auxiliary machinery load 240. In place of starter 200, a motor generator may be used. Further, a battery for supplying power when engine 100 is stopped may additionally be provided. Starter 200 or the motor generator corresponds to the "starter device" of engine 100. Auxiliary machinery load 240 includes a step motor 242, and vehicle components such as a light, audio equipment and air conditioner compressor (not shown). By the idling stop system, operation of engine 100 is repeatedly started or stopped every time predetermined starting conditions or predetermined stopping conditions are satisfied, after the vehicle starts running.

Step motor 242 is used for switching a flow path of a medium circulating through the inside of a component provided in the vehicle.

In the present embodiment, step motor 242 is used for, but not limited to, switching a dumper provided in the flow path of air circulating through the inside of an air conditioner. By way of example, step motor 242 may be used for switching a dumper provided in a flow path of a cooling medium circulating through at least one of the inside of engine 100 and inside of the transmission mounted on the vehicle.

As a control system controlling such hardware, the idling stop system includes ABS (Antilock Braking System)_ECU (Electronic Control Unit) 1000, an eco-run ECU 2000, and an ECU 3000.

ABS_ECU 1000 receives as inputs a signal from a G sensor 1100 (signal of a physical amount representing vehicle inclination or acceleration), a signal from a brake master pressure sensor 1200 (signal of a physical amount representing effectiveness of vehicle brake equipment) and a signal from a vehicle speed sensor 1300 (signal of a physical amount representing vehicle speed), respectively.

Eco-run ECU 2000 receives as inputs a brake signal representing that the brake is in operation, which is linked to a brake lamp signal, a shift signal representing a shift position of the transmission, and a clutch signal representing the state of operation of a clutch.

ECU 3000 receives as inputs a signal from an accelerator switch 3100 detecting pressing of an accelerator pedal, a signal from an EMPS (Electronic Motor Power Steering) sensor 3200 detecting an operation of steering, a signal from an NE sensor 3300 detecting speed of rotation (NE) of engine 100, and a signal from a voltmeter 3500 detecting a voltage of battery 250.

Further, a sensor signal is transmitted from ABS_ECU 1000 to eco-run ECU 2000; an engine start command signal and a stop command signal for engine 100 are transmitted from eco-run ECU 2000 to ECU 3000; and a sensor signal is transmitted from ECU 3000 to eco-run ECU 2000. Based on the start command signal of engine 100 received from eco-run ECU 2000, ECU 3000 transmits a starter signal, so that starter 200 cranks engine 100 and engine 100 starts its operation again.

In a memory of eco-run ECU 2000, predetermined starting conditions and predetermined stop conditions of engine 100 are stored. The predetermined starting conditions and predetermined stop conditions are conditions related to the state of running of the vehicle, such as conditions related to the vehicle speed, shift position of the transmission, brake state and so on. The predetermined starting condition may be that predetermined stop conditions are not satisfied.

When the predetermined starting conditions are satisfied, eco-run ECU 2000 transmits a start command signal of engine 100 to ECU 3000. When the predetermined stop conditions are satisfied, eco-run ECU 2000 transmits a stop command signal of engine 100 to ECU 3000.

Further, ECU 3000 drives step motor 242 in accordance with the state of manipulation or state of driving of an air conditioner (not shown). The controller for the vehicle in accordance with the present embodiment is implemented by ECU 3000. In the present embodiment, ECU 3000 is described as controlling starting operation of engine 100 and controlling driving of step motor 242. It is also possible to use a different ECU to control starting operation of engine 100 and control driving of step motor 242.

ECU 3000 controls step motor 242 in an open loop. ECU 3000 controls step motor 242 such that when IG switch is turned on, rotational position of the motor reaches the initial position, for example, by bringing into abutment a member provided on a rotation shaft of step motor 242 with a stopper provided at an origin position.

Further, ECU 3000 detects a rotational position of step motor 242 by detecting an amount of rotation based on control history (such as an integrated value of command values of driving control or time of electric conduction) for step motor 242.

Further, ECU 3000 determines whether step motor 242 is being driven or not. By way of example, ECU 3000 may determine the driving state based on a flag that is set on when step motor 242 is driven and set off when it is stopped, or based on the change in amount of rotation of step motor 242.

In a vehicle structured as described above, the present invention is characterized in the following points. Specifically, ECU 3000 determines whether the vehicle is in a state in which the voltage of battery 250 as the power storage device may possibly attain to a predetermined voltage value or lower; while the vehicle is determined to be in the state in which the voltage may possibly attain to the predetermined voltage or lower, driving history of step motor 242 is obtained; and step motor 242 is controlled such that the rotational position reaches the initial position, based on the obtained driving history.

Specifically, ECU 3000 as the controller for the vehicle in accordance with the present embodiment determines whether the voltage of battery 250 detected by voltmeter 3500 is equal to or lower than the predetermined voltage. While the voltage of battery 250 is determined to be the predetermined voltage or lower, ECU 3000 integrates driving time of step motor 242. When the integrated driving time attains to a predetermined time period or longer, ECU 3000 control step motor 242 such that the rotational position reaches the initial position.

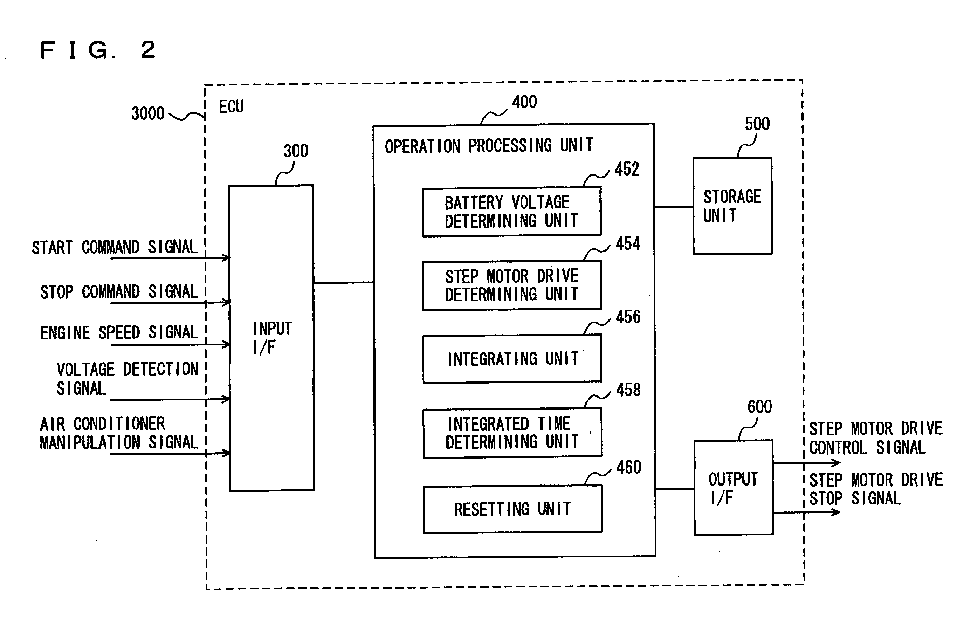

Fig. 2 is a functional block diagram of ECU 3000 as the controller for the vehicle in accordance with the present embodiment. ECU 3000 includes an input interface (hereinafter denoted as input I/F) 300, an operation processing unit 400, a storage unit 500, and an output interface (hereinafter denoted as output I/F) 600.

Input I/F 300 receives an engine start command signal and an engine stop command signal from eco-run ECU 2000, an engine speed signal from NE sensor 3300, a voltage detection signal from voltmeter 3500, and an operation signal of the air conditioner.

Processing unit 400 includes a battery voltage determining unit 452, a step motor drive determining unit 454, an integrating unit 456, an integrated time determining unit 458, and a resetting unit 460.

Battery voltage determining unit 452 determines whether the voltage of battery 250 is equal to or lower than a predetermined voltage Vb. Battery voltage determining unit 452 determines whether the voltage of battery 250 is equal to or lower than the predetermined voltage Vb, based on a voltage detection signal from voltmeter 3500. Here, the "predetermined voltage Vb" is not specifically limited, and it may be any voltage that does not cause any deviation between the actual rotational position of step motor 242 and the rotational position based on the amount of rotation of step motor 242, and it is, by way of example, adopted through experiments.

Battery voltage determining unit 452 may set on a battery voltage determination flag, if the voltage of battery 250 is not higher than the predetermined voltage Vb.

Step motor drive determining unit 454 determines whether step motor 242 is being driven or not. Step motor drive determining unit 454 may determine whether step motor 242 is being driven or not based on the flag that is set on as the step motor 242 is driven, or it may determine based on the change in the amount of rotation of step motor 242. Step motor drive determining unit 454 may set on a drive determination flag, if step motor 242 is being driven.

When integrating conditions that the voltage of battery 250 is not higher than the predetermined voltage Vb and that step motor 242 is being driven are satisfied, integrating unit 456 integrates driving time of step motor 242 as long as the integrating conditions are satisfied. When integrating conditions are satisfied, integrating unit 456 reads driving time integrated by last calculation and stored in storage unit 500, and integrates the driving time of step motor 242. If the integrating conditions are not satisfied, that is, if the voltage of battery 250 is higher than the predetermined voltage Vb or if the step motor 242 is not being driven, integrating unit 456 stops integration. Integrating unit 456 stores the driving time integrated up to the time when integration is stopped, in storage unit 500. Integrating unit 456 may integrate the driving time of step motor 242 if the battery voltage determination flag is on and the drive determination flag is on.

In the present embodiment, integrating unit 456 is described assuming that the integrated driving time is reset to the initial value, when a resetting process, which will be described later, is executed. Such an operation is applied when the rotational position of step motor 242 is not reset to the initial position after turning off of IG switch but stored in storage unit 500.

In addition to the resetting process, integrating unit 456 may reset the integrated drive time to the initial value when the IG switch is turned off, or when it is turned off and turned on again. Such an operation may be applied when step motor 242 is reset to the initial position after the IG switch is turned off.

Integrated time determining unit 458 determines whether the integrated driving time is equal to a predetermined time period Ta or longer. Integrated time determining unit 458 may set on an integrated time determination flag when, for example, the integrated driving time is equal to or longer than the predetermined time period Ta.

Reset processing unit 460 controls step motor 242 such that the rotational position reaches the initial position, when it is determined by integrated time determining unit 458 that the integrated driving time is equal to or longer than the predetermined time period Ta. Resetting unit 460 may control the step motor such that the rotational position reaches the initial position when the integrated time determination flag is on.

At the initial position of step motor 242, a stopper, which corresponds to the member provided on the rotation shaft of step motor 242, is provided, preventing rotation of step motor 242 in one of the directions of rotation.

When resetting process starts, resetting unit 460 transmits a step motor drive control signal through output I/F 600 to step motor 242, causing step motor 242 to rotate such that rotational position comes to the initial position. Resetting unit 460 keeps transmitting the step motor drive control signal to step motor 242 so that step motor 242 is driven until sufficient time period passes to determine that the rotational position of step motor 242 has moved to the initial position. The time sufficient for determining that the rotational position of step motor 242 has moved to the initial position may be adopted through experiments and the like. After sufficient time period has passed to determine that the rotational position of step motor 242 has moved to the initial position, resetting unit 406 transmits a step motor drive stopping signal to step motor 242, and terminates the resetting process.

Preferably, resetting unit 460 controls the motor such that the rotational position reaches the initial position while the driving period of step motor 242 does not overlap the period in which the voltage of battery 250 attains to the predetermined voltage or lower. Alternatively, it is desired that resetting unit 460 controls the motor such that the rotational position reaches the initial position while the driving period of step motor 242 does not overlap the period from the request of operation to the start of operation of engine 100. By such control, the rotational position of the motor can reliably be returned to the initial position.

Further, resetting unit 460 may execute the process when predetermined process starting conditions are satisfied after the integrated driving time reaches the predetermined time period Ta or longer. The predetermined process starting condition is not specifically limited, and it may be that the voltage of battery 250 is larger than the predetermined voltage Vb, that the start determination flag is off, or that a predetermined time period has passed after the condition related to battery 250 and/or the condition related to the start determination flag is satisfied.

In the present embodiment, battery voltage determining unit 452, step motor drive determining unit 454, integrating unit 456, integrated time determining unit 458 and resetting unit 460 are described as software functions realized by a CPU as the operation processing unit 400 executing a program stored in storage unit 500. These units, however, may be implemented by hardware. Such a program is recorded on a storage medium and mounted on the vehicle.

Storage unit 500 stores various pieces of information, programs, threshold values and maps, and data may be read or stored by operation processing unit 400 as needed.

In the following, a control structure of the program executed by ECU 3000 as the controller for the vehicle in accordance with the present embodiment will be described.

At S100, ECU 3000 determines whether the voltage of battery 250 is equal to or lower than the predetermined voltage Vb. If the voltage of battery 250 is equal to or lower than the predetermined voltage Vb (YES at S 100), the process proceeds to S102. If not (NO at S100), the process proceeds to S 106.

At S102, ECU 3000 determines whether step motor 242 is being driven or not. If step motor 242 is being driven (YES at S102), the process proceeds to S 104. If not (NO at S102), the process proceeds to S 106.

At S104, ECU 3000 integrates driving time of step motor 242. At S106, ECU 3000 determines whether the integrated driving time is equal to or longer than the predetermined time period Ta. If the integrated driving time is equal to or longer than the predetermined time period Ta (YES at S 106), the process proceeds to S108. If not (NO at S106), the process ends.

At S108, ECU 3000 resets step motor 242. At the end of resetting, ECU 3000 updates the integrated driving time to initial value Tc(0).

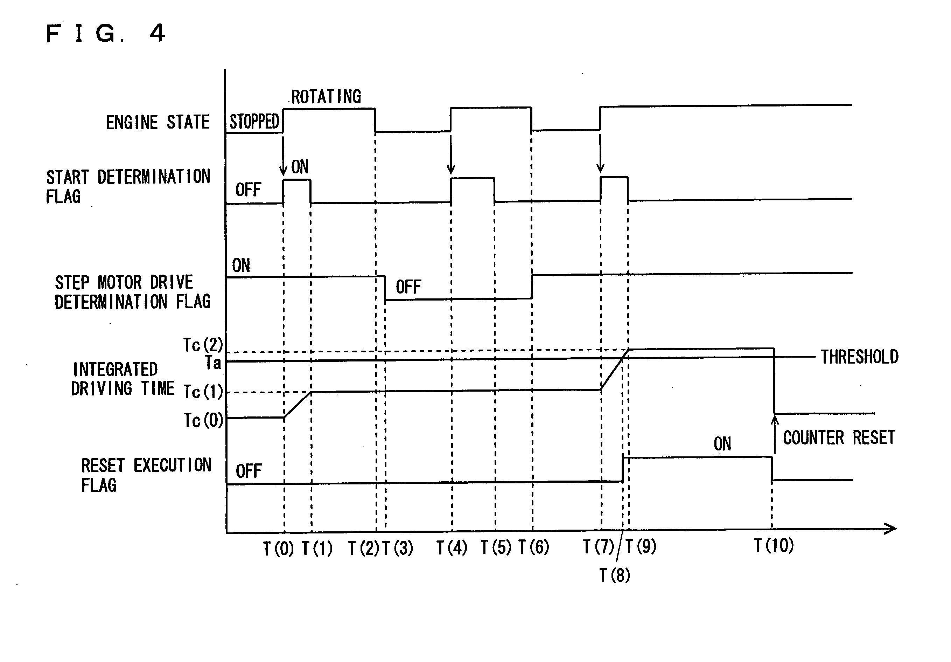

The operation of ECU 3000 as the controller for the vehicle in accordance with the present embodiment based on the structure and flowchart above will be described with reference to Fig. 4.

Assume that the vehicle stops temporarily, at a red light. When predetermined stop conditions are satisfied, engine 100 stops. The air conditioner is kept operated in accordance with the state of manipulation or state of operation and, therefore, step motor 242 is driven to switch between intake of external air and circulation of internal air as needed, and the air flow path in the air conditioner is switched.

If starter 200 is not driven and the battery voltage is higher than the predetermined voltage Vb (NO at S 100), driving time of step motor 242 is not integrated (NO at S 106) and, therefore, resetting does not take place.

At time point T(0), when the driver switches shift position from neutral (N) to forward drive (D) by operating a shift lever, or when the driver releases brake pedal, predetermined starting condition is satisfied (or predetermined stopping condition is not satisfied) and, therefore, the start determination flag is set on and the process for starting engine 100 is executed. At this time, starter 200 is driven. Rotation of starter 200 rotates the output shaft of engine 100 and the rotation speed of engine 100 detected by NE sensor 300 increases. Thus, engine 100 is in the rotating state.

When starter 200 is driven, the voltage lowers further than at a normal discharge (when starter 200 is not driven). If the battery voltage attains to the predetermined voltage Vb or lower at this time (YES at S 100), as step motor 242 is being driven in accordance with the state of manipulation or state of operation of the air conditioner (YES at S 102), integration of driving time starts (S104). Integration of the driving time starts from the initial value Tc(0).

At time point T(1), when engine 100 starts rotation by itself, driving of starter 200 is stopped and the voltage of battery 250 becomes higher than the predetermined voltage Vb (NO at S100), integration of driving time is stopped even if step motor 242 is being driven.

At time point T(2), when the predetermined conditions are satisfied as the vehicle again temporarily stops, for example, engine 100 stops. Thus, engine 100 again is in the stopped state.

At time point T(3), when step motor 242 stops in accordance with the state of manipulation or state of operation of the air conditioner, integration of driving time is not performed as the step motor 242 is not driven (NO at S102), even if predetermined starting conditions are satisfied and engine 100 starts its operation (YES at S 100) in the time period from T(4) to T(5).

Assume that at time point T(6), the predetermined stop conditions are satisfied again and engine 100 stops, and step motor 242 is driven in accordance with the state of manipulation or state of operation of the air conditioner.

At time point T(7), when the starting conditions of engine 100 are satisfied, the start determination flag is set on, and the process for starting operation of engine 100 is executed. Here, starter 200 is driven. Therefore, engine 100 is in the rotating state. If the voltage of battery 250 attains to the predetermined voltage Vb or lower at this time (YES at S100), integration of driving time starts, as step motor 242 is being driven (YES at S102). Integration of driving time starts from the driving time Tc(1) integrated to the last calculation.

At time point T(8), when the integrated time reaches predetermined time Ta or longer (YES at S106), a reset execution flag is set on (S108), and at time point T(9), engine 100 starts rotation by itself, driving of starter 200 is stopped, and the integration stops after integration to the driving time Tc(2).

In the resetting process, step motor 242 is rotated so that the rotational position reaches the initial position. When resetting ends at time point T(10), the reset execution flag is turned off, and the integrated driving time is updated to the initial value Tc(0).

As the process for resetting step motor 242 is executed, increase in deviation between the actual rotational position of step motor 242 and the rotational position based on the amount of rotation of step motor 242 can be prevented.

As described above, according to the controller for the vehicle of the present embodiment, when the battery voltage attains to the predetermined voltage Vb or lower, the deviation between the actual rotational position of the step motor and the rotational position based on the amount of rotation of the step motor increases as the driving time becomes longer. Therefore, by integrating the driving time of step motor when the battery voltage is equal to or lower than the predetermined voltage Vb and controlling the motor such that the rotational position is moved to the initial position when the integrated driving time attains to the predetermined time period Ta or longer, it is possible to eliminate the increased deviation. Thus, a controller for the vehicle, which prevents deviation between the actual rotational position of a step motor and a rotational position detected based on the amount of operation of the step motor resulting from repeated start and stop operations of the engine, can be provided.

### <Second Embodiment>

In the following, a controller for a vehicle in accordance with the second embodiment will be described. The controller for the vehicle in accordance with the present embodiment differs from the controller for the vehicle in accordance with the first embodiment described above in the control structure of the program executed by ECU 3000. Except for this point, the configuration is the same as that of the controller for the vehicle in accordance with the first embodiment, and corresponding components are denoted by the same reference characters. Their functions are also the same. Therefore, detailed description thereof will not be repeated.

In the present embodiment, ECU 3000 is characterized in that driving time of step motor 242 is integrated if engine 100 is starting its operation and step motor 242 is being driven. Here, the state that "engine 100 is starting its operation" corresponds to "the period from when start of operation of engine 100 is requested until engine 100 starts its operation."

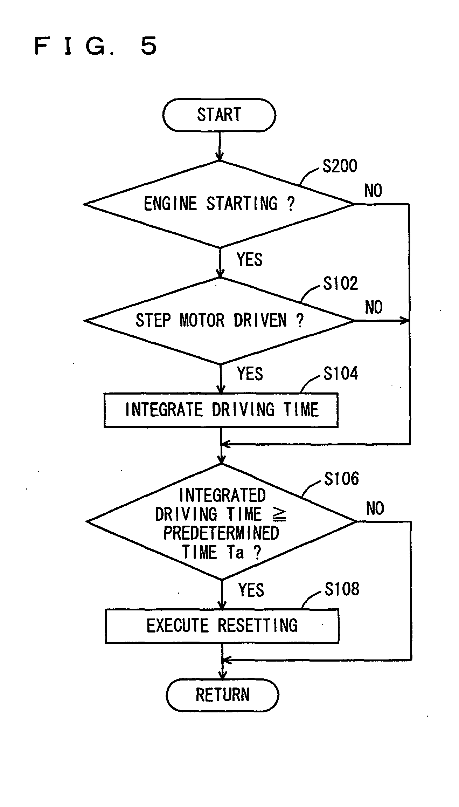

In the following, the control structure of the program executed by ECU 3000 as the controller for the vehicle in accordance with the present embodiment will be described with reference to Fig. 5.

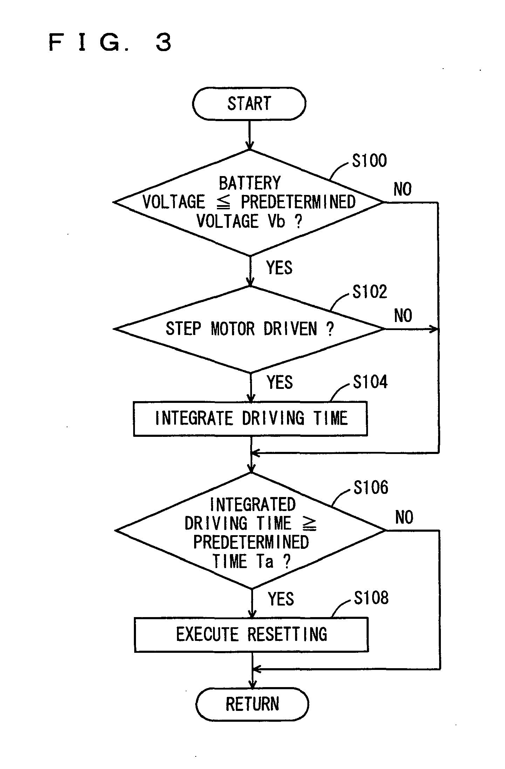

In the flowchart of Fig. 5, the same process steps as in the flowchart of Fig. 3 are denoted by the same step numbers. Contents of processing of these steps are also the same. Therefore, detailed description thereof will not be repeated here.

At step 200, ECU 3000 determines whether engine 100 is starting its operation. ECU 3000 may determine that engine 100 is starting its operation if starter 200 is being driven, or it may determine that engine 100 is starting its operation by checking the state of change in speed of rotation of engine 100, detected by NE sensor 3300, from zero to self-rotation speed. The method of determining whether the engine is starting its operation or not is not specifically limited. If engine 100 is starting its operation (YES at S200), the process proceeds to S102. If not (NO at S200), the process proceeds to S106.

The operation of ECU 3000 as the controller for the vehicle in accordance with the present embodiment based on the structure and flowchart above will be described.

Assume that the vehicle stops temporarily, at a red light. When predetermined stop conditions are satisfied, engine 100 stops. The air conditioner is kept operated in accordance with the state of manipulation or state of operation and, therefore, step motor 242 is driven to switch between intake of external air and circulation of internal air as needed, and the air flow path in the air conditioner is switched.

If engine 100 is not determined to be starting its operation (NO at S200), the driving time of step motor 242 is not integrated (NO at S106), and the resetting process is not executed.

When the driver switches shift position from neutral (N) to forward drive (D) by operating a shift lever, or when the driver releases brake pedal, predetermined starting condition is satisfied (or predetermined stopping condition is not satisfied) and, therefore, the start determination flag is set on and the process for starting engine 100 is executed. At this time, starter 200 is driven and engine is in the state of starting its operation (YES at S200). If it is determined that engine 100 is starting its operation, as step motor 242 is being driven in accordance with the state of manipulation or state of operation of the air conditioner (YES at S102), integration of driving time starts (S 104). When the integrated time reaches predetermined time Ta or longer (YES at S106), a reset execution flag is set on (S108), and the resetting process starts (S108).

In the resetting process, step motor 242 is rotated so that the rotational position reaches the initial position. When resetting ends, the reset execution flag is set off, and the integrated driving time is updated to the initial value Tc(0).

As the process for resetting step motor 242 is executed, increase in deviation between the actual rotational position of step motor 242 and the rotational position based on the amount of rotation of step motor 242 can be prevented.

As described above, according to the controller for the vehicle of the present embodiment, in a state in which the battery voltage may possibly attain to the predetermined voltage Vb or lower as in the period when the engine is starting its operation, the deviation between the actual rotational position of the step motor and the rotational position based on the amount of rotation of the step motor increases as the driving time becomes longer. Therefore, by integrating the driving time of step motor when the engine is starting its operation and controlling the motor such that the rotational position is moved to the initial position when the integrated driving time attains to the predetermined time period Ta or longer, it is possible to eliminate the increased deviation. Thus, a controller for the vehicle, which prevents deviation between the actual rotational position of a step motor and a rotational position detected based on the amount of operation of the step motor resulting from repeated start and stop operations of the engine, can be provided.

### <Comparative Example>

In the following, a controller for a vehicle in accordance with a comparative example, which is not covered by the present invention, will be described. The controller for the vehicle in accordance with the present example differs from the controller for the vehicle in accordance with the first embodiment described above in the control structure of the program executed by ECU 3000. Except for this point, the configuration is the same as that of the controller for the vehicle in accordance with the first embodiment, and corresponding components are denoted by the same reference characters. Their functions are also the same. Therefore, detailed description thereof will not be repeated.

In the present example, ECU 3000 is characterized in that number of driving (frequency of driving) of step motor 242 is integrated if the voltage of battery 250 is equal to or lower than the prescribed voltage Vb and step motor 242 is being driven. In the present example, the "number of driving of step motor 242" refers to the "number of driving steps of step motor 242." Specifically, when one step of step motor 242 is driven, the number of driving is incremented by 1. Alternatively, the number of driving may be incremented by 1 every time the motor is driven by a predetermined number of steps.

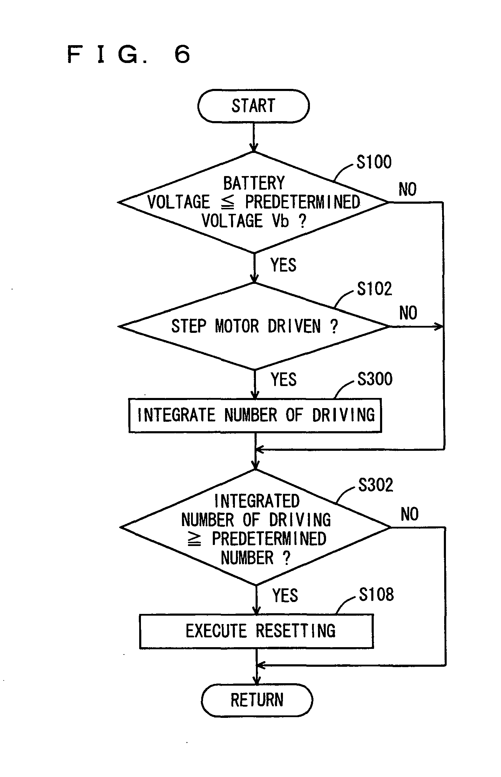

In the following, the control structure of the program executed by ECU 3000 as the controller for the vehicle in accordance with the present example will be described with reference to Fig. 6.

In the flowchart of Fig. 6, the same process steps as in the flowchart of Fig. 3 are denoted by the same step numbers. Contents of processing of these steps are also the same. Therefore, detailed description thereof will not be repeated here.

At step S300 following the determination of YES at step S102, ECU 3000 integrates the number of driving.

At S302, ECU 3000 determines whether the integrated number of driving reaches a predetermined number or larger. The "predetermined number" is not specifically limited, and it may be appropriately adopted through experiments and the like. If the integrated number of driving attains to the predetermined number or larger (YES at S302), the process proceeds to S108. If not (NO at S302), the process ends.

The operation of ECU 3000 as the controller for the vehicle in accordance with the present example based on the structure and flowchart above will be described.

Assume that the vehicle stops temporarily, at a red light. When predetermined stop conditions are satisfied, engine 100 stops. The air conditioner is kept operated in accordance with the state of manipulation or state of operation and, therefore, step motor 242 is driven to switch between intake of external air and circulation of internal air as needed, and the air flow path in the air conditioner is switched.

If starter 200 is not driven and the battery voltage is higher than the predetermined voltage Vb (NO at S100), the number of driving of step motor 242 is not integrated (NO at S302) and, therefore, resetting does not take place.

When the driver switches shift position from neutral (N) to forward drive (D) by operating a shift lever, or when the driver releases brake pedal, predetermined starting condition is satisfied (or predetermined stopping condition is not satisfied) and, therefore, the start determination flag is set on and the process for starting engine 100 is executed. At this time, starter 200 is driven. Rotation of starter 200 rotates the output shaft of engine 100 and the rotation speed of engine 100 detected by NE sensor 3300 increases. Thus, engine 100 is in the rotating state.

When starter 200 is driven, the voltage lowers further than at a normal discharge (when starter 200 is not driven). If the battery voltage attains to the predetermined voltage Vb or lower at this time (YES at S100), as step motor 242 is being driven in accordance with the state of manipulation or state of operation of the air conditioner (YES at S102), the number of driving is integrated, in correspondence with the step-by-step driving (S300). If the integrated number of driving reaches a predetermined number or larger (YES at S302), a reset execution flag is set on (S108), and the resetting process starts (S108).

In the resetting process, step motor 242 is rotated so that the rotational position reaches the initial position. When resetting ends, the reset execution flag is turned off, and the integrated number of driving is updated to the initial value.

As the process for resetting step motor 242 is executed, increase in deviation between the actual rotational position of step motor 242 and the rotational position based on the amount of rotation of step motor 242 can be prevented.

As described above, according to the controller for the vehicle of the present example, when the battery voltage attains to the predetermined voltage Vb or lower, the deviation between the actual rotational position of the step motor and the rotational position based on the amount of rotation of the step motor increases as the number of driving increases. Therefore, by integrating the number of driving of step motor when the battery voltage is equal to or lower than the predetermined voltage Vb and controlling the motor such that the rotational position is moved to the initial position when the integrated number of driving attains to the predetermined number or larger, it is possible to eliminate the increased deviation. Thus, a controller for the vehicle, which prevents deviation between the actual rotational position of a step motor and a rotational position detected based on the amount of operation of the step motor resulting from repeated start and stop operations of the engine, can be provided.

Although the present invention has been described and illustrated in detail, it is clearly understood that the same is by way of illustration and example only and is not to be taken by way of limitation, the scope of the present invention being interpreted by the terms of the appended claims.

## Claims

1. A controller for a vehicle including a step motor (242), a power storage device (500), an internal combustion engine (100) configured to repeatedly start and stop after said vehicle starts running, and a starter device (200) for starting operation of said internal combustion engine (100) using electric power supplied from the power storage device (500), said controller comprising:
detection means for detecting voltage of said power storage device (500);
determining means (452) for determining whether the voltage of said power storage device (500) is less than or equal to a predetermined voltage based on the detection result by said detection means;
obtaining means (456) for integrating a driving time of said step motor (242) when the voltage of said power storage device (500) is less than or equal to the predetermined voltage, and said step motor is in a driving state; and
control means (460) for controlling said step motor such that rotational position reaches an initial position when the driving time integrated by said obtaining means is greater than or equal to a predetermined time

2. The controller for the vehicle according to claim 1, wherein
said control means (460) includes means for controlling said step motor (242) such that a driving period of said step motor (242) does not overlap the period in which the voltage of said power storage device (500) attains to the predetermined voltage or lower.

3. The controller for the vehicle according to claim 1, wherein
said control means (460) includes means for controlling said step motor (242) such that a driving period of said step motor (242) does not overlap the period from when start of operation of said internal combustion engine (100) is requested until an operation of said internal combustion engine (100) is started.

4. The controller for the vehicle according to any of claims 1 to 3, wherein
said step motor (242) is configured to be used for switching a flow path of a medium circulating in a component provided in the vehicle.

5. The controller for the vehicle according to claim 4, wherein
said step motor (242) is configured to be used for switching a flow path of air circulating in an air conditioner provided in said vehicle.

6. The controller for the vehicle according to any of claims 1 to 5, wherein
said step motor (242) is configured to be used for switching a flow path of a cooling medium circulating in at least one of said internal combustion engine (100) and a transmission mounted in said vehicle.

7. The controller for the vehicle according to any of claims 1 to 6, wherein
said vehicle is provided with an idling stop system, in which said internal combustion engine (100) is configured to be stopped when a predetermined stop condition is satisfied and said internal combustion engine (100) is configured to be started by said starter device (200) when a predetermined starting condition is satisfied.

## Patentansprüche

1. Steuereinheit für ein Fahrzeug mit einem Schrittmotor (242), einer Energiespeichervorrichtung (500), einer Brennkraftmaschine (100), die konfiguriert ist, wiederholt zu starten und zu stoppen, nachdem das Fahrzeug zu laufen beginnt, und einer Startervorrichtung (200) zum Starten eines Betriebs der Brennkraftmaschine (100) unter Verwendung von elektrischer Energie, die von der Energiespeichervorrichtung (500) geliefert wird, wobei die Steuereinheit aufweist:
eine Erfassungseinrichtung zum Erfassen einer Spannung der Energiespeichervorrichtung (500);
eine Bestimmungseinrichtung (452) zum Bestimmen, ob die Spannung der Energiespeichervorrichtung (500) kleiner oder gleich einer vorbestimmten Spannung ist, basierend auf dem Erfassungsergebnis durch die Erfassungseinrichtung;
eine Beschaffungseinrichtung (456) zum Integrieren einer Antriebszeit des Schrittmotors (242), wenn die Spannung der Energiespeichervorrichtung (500) kleiner oder gleich der vorbestimmten Spannung ist, und sich der Schrittmotor in einem Antriebszustand befindet; und
eine Steuereinrichtung (460) zum derartigen Steuern des Schrittmotors, dass eine Drehposition eine Anfangsposition annimmt, wenn die durch die Beschaffungseinrichtung integrierte Antriebszeit größer oder gleich einer vorbestimmten Zeit ist.

2. Steuereinheit für das Fahrzeug gemäß Anspruch 1, wobei t
die Steuereinrichtung (460) eine Einrichtung zum derartigen Steuern des Schrittmotors (242) umfasst, dass sich eine Antriebsperiode des Schrittmotors (242) nicht mit der Periode überschneidet, in der die Spannung der Energiespeichervorrichtung (500) die vorbestimmte Spannung oder weniger erreicht.

3. Steuereinheit für das Fahrzeug gemäß Anspruch 1, wobei
die Steuereinrichtung (460) eine Einrichtung zum derartigen Steuern des Schrittmotors (242) umfasst, dass sich eine Antriebsperiode des Schrittmotors (242) nicht mit der Periode überschneidet, die von dem Zeitpunkt, zu dem ein Start eines Betriebs der Brennkraftmaschine (100) angefordert wird, bis zu dem Zeitpunkt reicht, zu dem ein Betrieb der Brennkraftmaschine (100) gestartet wird.

4. Steuereinheit für das Fahrzeug gemäß einem der Ansprüche 1 bis 3, wobei
der Schrittmotor (242) konfiguriert ist, zum Umschalten eines Strömungswegs eines Mediums verwendet zu werden, das in einer in dem Fahrzeug bereitgestellten Komponenten zirkuliert.

5. Steuereinheit für das Fahrzeug gemäß Anspruch 4, wobei
der Schrittmotor (242) konfiguriert ist, zum Umschalten eines Strömungswegs von Luft verwendet zu werden, die in einer in dem Fahrzeug bereitgestellten Klimaanlage zirkuliert.

6. Steuereinheit für das Fahrzeug gemäß einem der Ansprüche 1 bis 5, wobei
der Schrittmotor (242) konfiguriert ist, zum Umschalten eines Strömungswegs eines Kühlmediums verwendet zu werden, das in der Brennkraftmaschine (100) und/oder einem in dem Fahrzeug installierten Getriebe zirkuliert.

7. Steuereinheit für das Fahrzeug gemäß einem der Ansprüche 1 bis 6, wobei
das Fahrzeug mit einem Leerlaufstoppsystem versehen ist, bei dem die Brennkraftmaschine (100) konfiguriert ist, gestoppt zu werden, wenn eine vorbestimmte Stoppbedingung erfüllt ist, und die Brennkraftmaschine (100) konfiguriert ist, durch die Startervorrichtung (200) gestartet zu werden, wenn eine vorbestimmte Startbedingung erfüllt ist.

## Revendications

1. Unité de commande pour un véhicule comportant un moteur pas à pas (242), un dispositif de stockage d'énergie (500), un moteur à combustion interne (100) configuré pour démarrer et s'arrêter après que ledit véhicule ne commence à rouler, et un dispositif de démarrage (200) pour déclencher le fonctionnement dudit moteur à combustion interne (100) en utilisant de l'énergie électrique alimentée à partir du dispositif de stockage d'énergie (500), ladite unité de commande comprenant :
un moyen de détection permettant de détecter une tension dudit dispositif de stockage d'énergie (500) ;
un moyen de détermination (452) permettant de déterminer si la tension dudit dispositif de stockage d'énergie (500) est inférieure ou égale à une tension prédéterminée sur la base du résultat de détection par ledit moyen de détection ;
un moyen d'obtention (456) permettant d'intégrer un temps d'entraînement dudit moteur pas à pas (242) lorsque la tension dudit dispositif de stockage d'énergie (500) est inférieure ou égale à la tension prédéterminée, et ledit moteur pas à pas est dans un état d'entraînement ; et
un moyen de commande (460) permettant de commander ledit moteur pas à pas de sorte qu'une position de rotation atteigne une position initiale lorsque le temps d'entraînement intégré par ledit moyen d'obtention est supérieur ou égal à un temps prédéterminé.

2. Unité de commande pour le véhicule selon la revendication 1, dans laquelle
ledit moyen de commande (460) comporte un moyen permettant de commander ledit moteur pas à pas (242) de sorte qu'une période d'entraînement dudit moteur pas à pas (242) ne chevauche pas la période où la tension dudit dispositif de stockage d'énergie (500) atteint la tension prédéterminée ou moins.

3. Unité de commande pour le véhicule selon la revendication 1, dans laquelle
ledit moyen de commande (460) comporte un moyen permettant de commander ledit moteur pas à pas (242) de sorte qu'une période d'entraînement dudit moteur pas à pas (242) ne chevauche pas la période commençant lorsqu'un déclenchement de fonctionnement dudit moteur à combustion interne (100) est requis jusqu'à ce qu'un fonctionnement dudit moteur à combustion interne (100) est déclenché.

4. Unité de commande pour le véhicule selon l'une des revendications 1 à 3, dans laquelle
ledit moteur pas à pas (242) est configuré de façon à être utilisé pour commuter un passage d'écoulement d'un agent circulant dans un composant pourvu dans le véhicule.

5. Unité de commande pour le véhicule selon la revendication 4, dans laquelle
ledit moteur pas à pas (242) est configuré de façon à être utilisé pour commuter un passage d'écoulement de l'air circulant dans un climatiseur pourvu dans ledit véhicule.

6. Unité de commande pour le véhicule selon l'une des revendications 1 à 5, dans laquelle
ledit moteur pas à pas (242) est configuré de façon à être utilisé pour commuter un passage d'écoulement d'un agent de refroidissement circulant dans au moins l'un dudit moteur à combustion interne (100) et d'une transmission montée dans ledit véhicule.

7. Unité de commande pour le véhicule selon l'une des revendications 1 à 6, dans laquelle
ledit véhicule est pourvu d'un système d'arrêt au ralenti dans lequel ledit moteur à combustion interne (100) est configuré de façon à être arrêté lorsqu'une condition d'arrêt prédéterminée est satisfaite et ledit moteur à combustion interne (100) est configuré de façon à démarrer par ledit dispositif de démarrage (200) lorsqu'une condition de démarrage prédéterminée est satisfaite.
